# EUROPÄISCHE PATENTSCHRIFT

(11) **EP 1 491 383 B1**
(45) Veröffentlichungstag und Bekanntmachung des Hinweises auf die Patenterteilung: **03.05.2006**
(21) Anmeldenummer: 04014559.1
(22) Anmeldetag: 22.06.2004
(51) Int. Cl.: B60K 25/00, B60K 17/28

(54) **System zum Betreiben eines Nutzfahrzeugs, insbesondere eines Landfahrzeugs**
Method of operating a truck, especially a tractor
Procédé d'exploitation d'un camion, notamment d'un tracteur

(30) Priorität: 25.06.2003 DE 10328485
(43) Veröffentlichungstag der Anmeldung: 29.12.2004
(73) Patentinhaber: ZF FRIEDRICHSHAFEN AG, 88038 Friedrichshafen (DE)
(72) Erfinder: Frühwirth, Gerhard, 4274 Schönau (AT)

(56) Entgegenhaltungen:
- EP-A- 1 270 306
- EP-A- 1 293 113
- DE-A1- 1 680 674
- JP-A- 6 001 155
- PATENT ABSTRACTS OF JAPAN Bd. 018, Nr. 192 (M-1587), 4. April 1994 (1994-04-04) & JP 06 001155 A (YANMAR DIESEL ENGINE CO LTD), 11. Januar 1994 (1994-01-11)

## Beschreibung

Die vorliegende Erfindung betrifft ein System zum Betreiben eines Nutzfahrzeugs, insbesondere eines Landfahrzeugs gemäß dem Oberbegriff des Patentanspruchs 1.

Heutzutage umfassen universell einsetzbare Nutzfahrzeuge üblicherweise mehrere verschiedene Antriebe mit unterschiedlichen Eigenschaften und Einstellmöglichkeiten, wobei die Antriebe vorgegebenen Funktionen fest zugeordnet sind. Beispielsweise weist ein Traktor einen Fahrantrieb und einen oder zwei Zapfwellenantriebe, welche jeweils ein Getriebe und eine Steuerung umfassen.

Aus der gattungsgemäßen DE 101 45 643 C1 ist z. B. eine Regelung für den Antrieb an einer Zapfwelle an einem Landfahrzeug bekannt, bei der die Drehzahl der Zapfwelle stufenlos und unabhängig von der Motordrehzahl einstellbar ist. Hierbei ist zwischen Motor und Zapfwelle ein stufenloses Getriebe angeordnet, welches mittels eine Steuergerätes gesteuert wird.

Der vorliegenden Erfindung liegt die Aufgabe zugrunde, ein Verfahren zum Betreiben eines Nutzfahrzeugs, insbesondere eines Landfahrzeugs anzugeben, welches eine bessere Zuteilung der Getrieberessourcen an den speziellen Anwendungsfall für die Arbeit mit dem Fahrzeug gewährleistet. Dadurch soll die Ausnutzung der Ressourcen des Fahrzeugs optimiert und die Flexibilität erhöht werden.

Diese Aufgabe wird durch die Merkmale des Patentanspruchs 1 gelöst. Weitere Ausgestaltungen und Vorteile gehen aus den Unteransprüchen hervor.

Demnach wird vorgeschlagen, den den einzelnen Antrieben zugeordneten Getrieben ein Getriebe nachzuschalten, so dass es ermöglicht wird, verschiedene Getriebe auf verschiedene Antriebe zu schalten.

Auf diese Weise ist es möglich, ein hochwertigen. Antrieb, der z.B. ein Stufenlosgetriebe sein kann und bisher nur für den Fahrantrieb verwendet wird auf einen Zapfwellenaüsgang zu schalten, um dessen Einstellmöglichkeiten zu verbessern; andererseits kann, wenn bei den Fahrfunktionen keine besondere Qualität gefordert ist, das Zapfwellengetriebe mit seiner Anlaufkupplung als Fahrantrieb verwendet werden.

Gemäß der Erfindung sind die Ausgänge der Getriebe und die Antriebe in einer Schaltmatrix angeordnet, welche über das nachgeschaltete Getriebe das Verbinden der unterschiedlichen Getriebe mit den unterschiedlichen Antrieben (Fahrantrieb, Zapfwellenantrieb etc.) ermöglicht.

Entsprechend der Schaltstellung in der Schaltmatrix werden dann die Betriebsanforderungen in Abhängigkeit von den Fahreranforderungen gesteuert.

Die Erfindung wird im folgenden anhand der beigefügten Figuren beispielhaft näher erläutert.

Es stellen dar:
- Fig. 1: eine schematische Darstellung der Komponenten des Antriebsstrangs und der Nebenantriebe eines Nutzfahrzeugs gemäß der vorliegenden Erfindung;
- Fig. 2: eine schematische Darstellung der Komponenten des Antriebsstrangs und der Nebenantriebe eines Nutzfahrzeugs gemäß einer zweiten bevorzugten Ausführungsform der vorliegenden Erfindung und
- Fig. 3: eine schematische Darstellung der Komponenten des Antriebsstrangs und der Nebenantriebe eines Nutzfahrzeugs gemäß einer weiteren bevorzugten Ausführungsform der vorliegenden Erfindung.

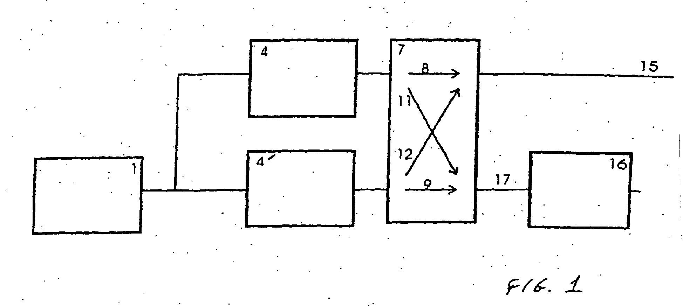

Im Rahmen der in Fig. 1 gezeigten Ausführungsform sind zwei verschieden stark ausgelegte Stufenlosgetriebe 4, 4' für Zapfwellen und Fahrantrieb vorgesehen. Des weiteren ist in Fig. 1 das Wendegetriebe 16 sowie die in der Schaltmatrix 7 vorgesehenen unterschiedlichen Verbindungsmöglichkeiten den zwei Antriebe 15, 17 mit den Getrieben 4, 4' dargestellt. Hierbei sind die Verbindungen durch die Pfeile 8 (Getriebe 4 verbunden mit Antrieb 15, z. B. Zapfwelle), 9 (Getriebe 4' verbunden mit Antrieb 17), 11 (Getriebe 4 verbunden mit Antrieb 17) und 12 (Getriebe 4' verbunden mit Antrieb 15) dargestellt.

Da der Motor 1 in seiner Leistungsfähigkeit beschränkt ist, sind keine Arbeiten möglich, die 100 % die Leistung am Fahrantrieb und 100 % Leistung an einem weiteren Antrieb benötigen. Aus diesem Grunde kann erfindungsgemäß auf zwei gleich starke Getriebe verzichtet werden, was in einer Kostensenkung resultiert; durch die Schaltmatrix 7 bzw. das nachgeschaltete Getriebe kann das stärkere Getriebe 4 dem Ausgang zugeordnet werden, der die höhere Leistungsanforderung hat.

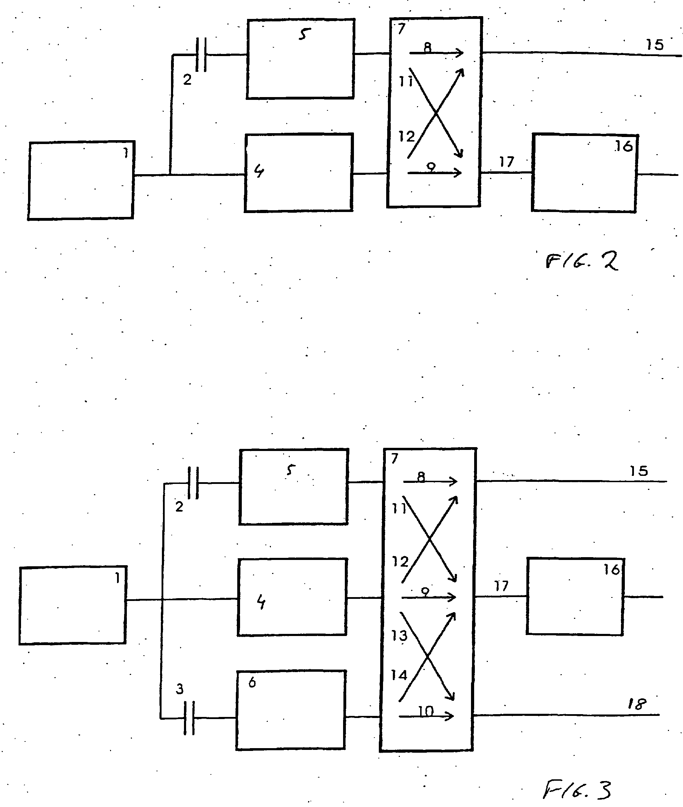

Gegenstand der Fig. 2 ist eine Ausführungsform mit einem Schaltgetriebe 5 und einem Stüfenlosgetriebe 4, wobei dem Schaltgetriebe 5 eine Kupplung 2 vorgeschaltet ist. Gemäß der Erfindung kann für den Fall von schweren Lasten das Stufenlosgetriebe 4 über die Schaltmatrix 7 mit dem Antrieb 15 verbunden werden (Pfeil 12 in der Schaltmatrix). Dadurch wird die Kupplung 2 geschont, denn ein Betrieb des Antriebs über das Schaltgetriebe kann bei schweren Lasten zu starkem Verschleiß der Kupplung führen.

Die weiteren in der Schaltmatrix 7 vorgesehenen Verbindungen sind: Getriebe 4 verbunden mit Antrieb 17 (Pfeil 9), Getriebe 5 verbunden mit Antrieb 17 (Pfeil 11) und Getriebe 5 verbunden mit Antrieb 15 (Pfeil 8).

Durch die Schaltmatrix 7 ergeben sich zusätzliche Möglichkeiten der Steuerung:

So kann beispielsweise im Fahrzeugstillstand der Anlauf über das Stufenlosgetriebe 4 bis zur synchronen Drehzahl des eingelegten Zapfwellenganges erfolgen, wobei anschließend das Schaltgetriebe 5 eingekuppelt werden kann, so dass nach der Lastübergabe das Stufenlosgetriebe 4 für den Fahrbetrieb zur Verfügung steht. Wenn eine sehr langsame Drehung der Zapfwelle nur um einen kleinen Winkel erforderlich ist, ist die Schaltung des Stufenlosgetriebes 4 ebenfalls von Vorteil.

Durch die erfindungsgemäße Konzeption kann das Schaltgetriebe mit der Kupplung 2 für den Fahrbetrieb verwendet werden, wobei in vorteilhafter Weise eine Übersetzungsstufe vorgesehen sein kann, die die Fahrzeugendgeschwindigkeit auf beispielsweise 1/3 der Endgeschwindigkeit reduziert, um in einen für Zapfwellenarbeiten geeigneten Arbeitsgeschwindigkeitsbereich zu kommen. Durch die Verbindung der Zapfwelle mit dem stufenlosen Antrieb kann eine Arbeitsmaschine unabhängig von der Motordrehzahl flexibel gesteuert werden.

Im Rahmen der in Fig. 3 gezeigten Ausführungsform sind zwei Schaltgetriebe 6, 6 mit Kupplungen 2 bzw. 3 und ein Stufenlosgetriebe 4 vorgesehen.

Die in der Schaltmatrix 7 vorgesehenen Verbindungen sind: Getriebe 4 verbunden mit Antrieb 17 (Pfeil 9), Getriebe 5 verbunden mit Antrieb 17 (Pfeil 11), Getriebe 5 verbunden mit Antrieb 15 (Pfeil 8), Getriebe 4 verbunden mit Antrieb 15 (Pfeil 12), Getriebe 4 verbunden mit Antrieb 18 (Pfeil 13), Getriebe 6 verbunden mit Antrieb 18 (Pfeil 10) und Getriebe 6 verbunden mit Antrieb 17 (Pfeil 14), wobei auch Verbindungen zwischen dem Antrieb 15 und dem Getriebe 6 oder dem Antrieb 18 und dem Getriebe 5 möglich sind; dies kann z. B. von Bedeutung sein, wenn eines der Getriebe 5, 6 eine Fehlfunktion aufweist.

Gemäß der Erfindung ist jedem Antrieb eine Steuereinheit bzw. Getrieberegler zugeordnet, welche die Anforderungen an Schaltstellung, Kupplungsstellung, Drehzahl etc. umsetzt und die aktuellen Zustandsdaten an eine übergeordnete Steuerung leitet.

Der jeweiligen jedem Antrieb zugeordneten Steuereinheit ist ein Funktionssteuergerät übergeordnet, dass die Funktionen und Strategien entsprechend den Fahreranforderungen als Sollwerte an den ausgewählten Getrieberegler sendet.

Gemäß der Erfindung ist ein den Funktionssteuergeräten übergeordneter-Koordinator vorgesehen, welcher die unterschiedlichen Verbindungen gemäß der Schaltmatrix steuert. Entsprechend dieser Konfiguration erfolgt das Routing der Anforderungssignale und der Rückmeldesignale an/vom jeweils aktivierten Funktionssteuergerät und zugeordnetem Getrieberegler.

### Bezugszeichen

- 1: Motor
- 2: Kupplung
- 3: Kupplung
- 4: Stufenlosgetriebe
- 4': Stufenlosgetriebe
- 5: Schaltgetriebe
- 6: Schaltgetriebe
- 7: Schaltmatrix
- 8: Verbindung
- 9: Verbindung
- 10: Verbindung
- 11: Verbindung
- 12: Verbindung
- 13: Verbindung
- 14: Verbindung
- 15: Antrieb
- 16: Wendegetriebe
- 17: Antrieb
- 18: Antrieb

## Patentansprüche

1. Nutzfahrzeug, insbesondere Landfahrzeug, umfassen einen Fahrantrieb (17) und mindestens einen Nebenantrieb (15, 18), **dadurch gekennzeichnet, dass** den den einzelnen Antrieben (15, 17, 18) zugeordneten Getrieben (4, 4', 5, 6) ein Getriebe nachgeschaltet ist, so dass es ermöglicht wird, die verschiedenen Getriebe (4, 4', 5, 6) auf die verschiedenen Antriebe (15, 17, 18) zu schalten.

2. Nutzfahrzeug nach Anspruch 1, **dadurch gekennzeichnet dass** die Ausgänge der Getriebe (4, 4', 5, 6) und die Antriebe (15, 17, 18) in einer Schaltmatrix (7) angeordnet sind, welche über das nachgeschaltete Getriebe das Verbinden der unterschiedlichen Getriebe (4, 4', 5, 6) mit den unterschiedlichen Antrieben (15, 17, 18) ermöglicht.

3. Nutzfahrzeug nach Anspruch 1 oder 2, **dadurch gekennzeichnet, dass** als Getriebe (4, 4', 5, 6) Stufenlosgetriebe (4, 4') und/oder Schaltgetriebe (5, 6) vorgesehen sind.

4. Nutzfahrzeug nach Anspruch 1, 2 oder 3, **dadurch gekennzeichnet, dass** jedem Antrieb (15, 17, 18) eine Steuereinheit bzw. Getrieberegler zugeordnet ist, welche die Anforderungen an Schaltstellung, Kupplungsstellung, Drehzahl etc. umsetzt, wobei jeder Steuereinheit ein Funktionssteuergerät übergeordnet ist, dass die Funktionen und Strategien entsprechend den Fahreranforderungen als Sollwerte an den ausgewählten Steuereinheit sendet und dass ein den Funktionssteuergeräten übergeordneter Koordinator vorgesehen ist, welcher die unterschiedlichen Verbindungen gemäß der Schaltmatrix (7) steuert.

## Revendications

1. Véhicule utilitaire, plus particulièrement véhicule agricole, comprenant un entraînement (17) et au moins un entraînement auxiliaire (15, 18), **caractérisé en ce que**, en aval des boîtes de vitesses (4, 4', 5, 6) associées aux différents entraînements (15, 17, 18), est branchée une boîte de vitesses de façon à ce qu'il soit possible d'enclencher les différentes boîtes de vitesses (4, 4', 5, 6) sur les différents entraînements (15, 17, 18).

2. Véhicule utilitaire selon la revendication 1, **caractérisé en ce que** les sorties des boîtes de vitesses (4, 4', 5, 6) et les entraînements (15, 17, 18) se trouvent dans une matrice d'enclenchement (7) qui permet de relier, par l'intermédiaire de la boîte de vitesses branchée en aval, les différentes boîtes de vitesses (4, 4', 5, 6) avec les différents entraînements (15, 17, 18).

3. Véhicule utilitaire selon la revendication 1 ou 2, **caractérisé en ce que** les boîtes de vitesses (4, 4', 5, 6) sont des boîtes de vitesses variables en continu (4, 4') et/ou des boîtes de vitesses à enclenchement (5, 6).

4. Véhicule utilitaire selon la revendication 1, 2 ou 3, **caractérisé en ce que**, à chaque entraînement (15, 17, 18) est associée une unité de commande ou un régulateur de boîte de vitesses qui convertit les exigences concernant la position d'enclenchement, la position d'embrayage, la vitesse de rotation, etc., chaque unité de commande étant subordonnée à un dispositif de contrôle des fonctions, qui envoie les fonctions et les stratégies correspondant aux exigences du conducteur en tant que valeurs de consigne aux unités de commande sélectionnées, et **en ce qu'**un coordinateur situé hiérarchiquement au-dessus des dispositifs de contrôle des fonctions est prévu afin de contrôler les différentes liaisons selon la matrice d'enclenchement (7).

## Claims

1. Utility vehicle, in particular an agricultural vehicle, comprising a transmission drive (17) and at least one auxiliary drive (15, 18), **characterised in that** a transmission is connected downstream of the gears (4, 4', 5, 6) co-operating with the individual drives (15, 17, 18), thereby enabling the different gears (4, 4', 5, 6) to be switched to the different drives (15, 17, 18).

2. Utility vehicle as claimed in claim 1, **characterised in that** the outputs of the gears (4, 4', 5, 6) and the drives (15, 17, 18) are disposed in a switching matrix (7) which enables the different gears (4, 4', 5, 6) to be connected to the different drives (15, 17, 18) via the transmission connected downstream.

3. Utility vehicle as claimed in claim 1 or 2, **characterised in that** the gears (4, 4', 5, 6) are infinitely variable gears (4, 4') and/or change speed gears (5, 6).

4. Utility vehicle as claimed in claim 1, 2 or 3, **characterised in that** a control unit or gear controller is assigned to each drive (15, 17, 18), which implements commands in terms of switch position, clutch position, speed, etc., and each control unit operates under the control of a functional control unit which transmits the functions and strategies in the form of desired values to the selected control unit based on the driver's commands, and a primary co-ordinator is provided as a means of controlling the functional control devices, which controls the different connections on the basis of the switching matrix (7).
